# EUROPÄISCHE PATENTSCHRIFT

(11) **EP 3 768 567 B1**
(45) Veröffentlichungstag und Bekanntmachung des Hinweises auf die Patenterteilung: **23.08.2023**
(21) Anmeldenummer: 19715385.1
(22) Anmeldetag: 20.03.2019
(51) Int. Cl.: B61L 3/00, B61L 27/16, B61L 27/10, G08G 1/16, H04L 9/32, H04L 9/00

(54) **VERFAHREN ZUR DISPOSITION ODER STEUERUNG DER BEWEGUNGEN EINER MEHRZAHL VON FAHRZEUGEN ÜBER EIN NETZWERK VON VERKEHRSWEGEN**
METHOD FOR PLANNING OR CONTROLLING THE MOVEMENTS OF A PLURALITY OF VEHICLES OVER A NETWORK OF ROUTES
PROCÉDÉ POUR PRÉPARER OU COMMANDER LES DÉPLACEMENTS D'UNE PLURALITÉ DE VÉHICULES DANS UN RÉSEAU DE VOIES DE CIRCULATION

(30) Priorität: 23.03.2018 DE 102018204509
(43) Veröffentlichungstag der Anmeldung: 27.01.2021
(73) Patentinhaber: Deutsche Bahn AG, 10785 Berlin (DE)
(72) Erfinder: KINDLER, Daniel, 65824 Schwalbach (Ts.) (DE); SCHÖPF, Karl, 65197 Wiesbaden (DE); GOTTHARDT, Kai, 64625 Bensheim (DE); VON BONIN, Moritz, 13467 Berlin (DE); KUPERBERG, Michael, 60438 Frankfurt am Main (DE); BURCIU, Sergiu-Matei, 60438 Frankfurt am Main (DE)
(86) Internationale Anmeldenummer: PCT/DE2019/100259
(87) Internationale Veröffentlichungsnummer: WO 2019/179576

(56) Entgegenhaltungen:
- WO-A1-2017/092817
- DE-A1-102015 218 987
- Anonymous: "Distributed Ledger Technology: beyond block chain", , 31. Januar 2016 (2016-01-31), Seiten 1-88, XP055399284, Gefunden im Internet: URL:https://www.gov.uk/government/uploads/ system/uploads/attachment_data/file/492972 /gs-16-1-distributed-ledger-technology.pdf [gefunden am 2017-08-17]

## Beschreibung

Die Erfindung betrifft ein Verfahren zur Disposition oder Steuerung der Bewegungen einer Mehrzahl von Fahrzeugen über ein Netzwerk von Verkehrswegen, dessen Knoten und Kanten durch Verkehrsweg-Elemente gebildet sind.

Die Sicherheit von spurgebundenen Verkehrssystemen beruht nach gegenwärtigem Stand der Technik auf einem streng regulierten zentralen System, in dem sämtliche Elemente des Fahrweges, wie beispielsweise Weichen, Gleisabschnitte und Signale, durch eine zentrale Instanz in Form eines Stellwerkes gesteuert und einzelnen Zugfahrten zugewiesen werden. So wird beispielsweise die Freigabe bzw. Erlaubnis zur Durchführung einer Zugfahrt erst dann vom Stellwerk an das jeweilige Fahrzeug übertragen, wenn durch das Stellwerk in einem ersten Schritt die Verfügbarkeit aller für die Zugfahrt erforderlichen Feldelemente festgestellt und diese Feldelemente sodann in einem zweiten Schritt für die Zugfahrt verbindlich belegt und gesichert worden sind. Bisherige Automatisierungsansätze orientieren sich zum einen daran, die Anzahl der Stellwerke und die Anzahl der zu deren Bedienung benötigten Mitarbeiter durch Vergrößerung von deren jeweiligen räumlichen Stellbezirken zu verringern. Zum anderen wird die Signalisierung mittels ortsfester Signale zunehmend durch eine Signalisierung auf dem Führerstand der Fahrzeuge ersetzt, womit weitere Einsparungen durch Wegfall ortsfester Infrastrukturen (in Form von Signalen und deren Kabelanbindungen) ermöglicht werden. Allerdings ist ein solches System äußerst empfindlich gegen Störungen, die entweder von außen in das System hineingetragen werden oder durch interne Fehler im System selbst auftreten können. So kann bereits eine relativ kleine Ursache, wie z.B. eine durch einen von einem Zug herabgefallenen Eisklumpen blockierte Weichenzunge, dazu führen, dass sämtliche während der Dauer des Störungszustands über diese Weiche abzuwickelnden Zugfahrten zunächst blockiert sind und durch manuelles Eingreifen von Personal in der zentralen Instanz des örtlich zuständigen Stellwerks neu disponiert werden müssen. Obwohl es zahlreiche Ansätze gibt, das Umdisponieren durch Einsatz softwaregestützter Algorithmen zur automatisierten Konflikterkennung und Vermeidung von Fahrwegkonflikten zu automatisieren und zu beschleunigen, sind hierdurch bedingte Verzögerungen im Betriebsablauf nicht vollständig zu beseitigen. Noch größere Auswirkungen haben eine Unterbrechung der Kommunikationsverbindungen zwischen dem Stellwerk und einem Feldelement oder sogar der vollständige Ausfall eines Stellwerks an sich. Aus DE 10 2015 218 987 A1 ist ein Sicherungsverfahren für ein Gleisstreckennetz bekannt, bei dem Fahrzeuge von ausgewählten Streckenelementen in einer mehrstufigen Vorgehensweise Schritte zur Zuteilung als Fahrwegelement anfordern.

Der Erfindung liegt daher die Aufgabe zugrunde, ein Verfahren zur Disposition oder Steuerung der Bewegungen einer Mehrzahl von Fahrzeugen über ein Netzwerk von Verkehrswegen, dessen Knoten und Kanten durch Verkehrsweg-Elemente gebildet sind, bereitzustellen, welches eine Vereinfachung der innerhalb des Netzwerkes vorzuhaltenden technischen Infrastruktur ermöglicht sowie deren Verfügbarkeit und damit auch die Resistenz des Netzwerkes gegen technische Störungen verbessert.

Erfindungsgemäß wird diese Aufgabe in Verbindung mit dem Oberbegriff des Patentanspruches 1 dadurch gelöst, dass jedes Fahrzeug als eine in einem Distributed Ledger-System repräsentierte Entität Transaktions-Vereinbarungen mit den ebenfalls als Entitäten in diesem Distributed Ledger-System repräsentierten Verkehrsweg-Elementen abschließt, wobei jede Transaktions-Vereinbarung eines Fahrzeugs mit einem Verkehrsweg-Element mindestens eine Zeitangabe umfasst, die den Zeitraum der Belegung des Verkehrsweg-Elementes durch das Fahrzeug festlegt, und wobei die Verkehrsweg-Elemente einer für eine Fahrt des Fahrzeugs notwendigen Trasse zugehören. Auf diese Weise ist der aktuelle Zustand aller Verkehrswegelemente jederzeit allen Teilnehmern im Distributed Ledger-System transparent und bekannt, ohne dass eine nachträgliche Manipulation oder Veränderung dieses Zustandes durch die Teilnehmer möglich ist. Distributed Ledger-System sind für sich genommen aus dem Stand der Technik bekannt. Die Kernidee der Erfindung besteht darin, dass gemäß der erfinderischen Verfahrens jedes Fahrzeug im direkten Kontakt mit den einzelnen Verkehrswegelementen entlang der vom jeweiligen Fahrzeug im Netzwerk von Verkehrswegen prognostizierten und vorgeplanten Bewegungsroute Bewegungsberechtigungen für prognostizierte Zeitpunkte aushandelt. Das wesentliche Kriterium für das Zustandekommen einer solchen Transaktions-Vereinbarung ist die von konkurrierenden Vereinbarungen durch andere Fahrzeuge oder Blockierung durch Störungen freie Verfügbarkeit des jeweiligen Verkehrsweg-Elements. Durch den auf diese Weise ermöglichten Wegfall einer zentralen Instanz als Intermediär zwischen Fahrzeug und Verkehrsweg-Element wird die Verfügbarkeit des Dispositions- bzw. Steuerungsverfahrens deutlich erhöht. Hieraus resultiert eine wesentliche Erleichterung für die dynamische Disposition und Zuteilung von Verkehrsweg-Elementen zu Fahrzeugen, die deren Nutzung zur Realisierung einer vorgesehenen Bewegungsroute benötigen.

Dabei können nicht nur schienengebundene Verkehrssystem der Gegenstand eines solchen erfindungsgemäßen Dispositions- bzw. Steuerungsverfahrens sein, sondern auch andere Verkehrssysteme, wie z.B. benutzungsregulierte Straßen. Daneben können auch benutzungsregulierte Stellplätze für Fahrzeuge, wie z.B. Parkplätze, aber auch Halteplätze für Fahrzeuge an Gates, Haltestellen des öffentlichen Personenverkehrs sowie Be- oder Entladestellen im Warenverkehr Gegenstand eines solchen erfindungsgemäßen Dispositions- und Steuerungsverfahrens sein. So lässt sich mittels des erfindungsgemäßen Dispositions- bzw. Steuerungsverfahrens nicht nur die Bewegung von Luftfahrzeugen auf dem Vorfeld zwischen Start- bzw. Landebahn und Abfertigungsgate sondern auch die Bewegung von Flurförderfahrzeugen zwischen den verschiedenen Stationen eines Hochregallagers disponieren und steuern. Darüber hinaus können auch Bewegungen von Luftfahrzeugen auf vorgegebenen Flugtrassen Gegenstand eines solchen erfindungsgemäßen Dispositions- und Steuerungsverfahrens sein, sofern die Flugtrasse in räumliche Elemente segmentierbar ist. Hierzu bucht das Luftfahrzeug im Voraus (d.h. vor Nutzungsbeginn) seine geplante Flugbewegung auf der Flugtrasse, bestehend aus einer Mehrzahl von als Entitäten in einem Distributed Ledger System repräsentierten räumlichen Elementen zu definierten Zeitpunkten. Auf diese Weise ist auch unbemannten Luftfahrzeugen, wie z.B. Drohnen, die verbindliche und kollisionsfreie Belegung bzw. Buchung von Flugtrassen möglich. Das erfindungsgemäße Dispositions- und Steuerungsverfahren kann zu einer Vereinheitlichung der Verkehrssteuerung im länderübergreifenden Luftraum beitragen. Unter "Fahrzeugen" sind im Sinne der Erfindung als jegliche Arten von Verkehrs- oder Transportmitteln zu sehen, unabhängig davon, ob diese sich zu Lande, im Wasser oder in der Luft fortbewegen.

Gemäß einer besonders sinnvollen Weiterentwicklung des erfinderischen Grundkonzeptes ist vorgesehen, dass jede Transaktions-Vereinbarung eines Fahrzeugs mit einem Verkehrsweg-Element ein weiteres Transaktionskriterium umfasst, das ein für die Belegung des Verkehrsweg-Elementes durch das Fahrzeug zu entrichtendes Entgelt bezeichnet. Auf diese Weise können Fahr- oder Nutzungsberechtigungen für Verkehrsweg-Elemente in Abhängigkeit anderer Transaktionsbedingungen bepreist werden. Hierfür denkbare Anwendungsbeispiele könnten beispielsweise darin, dass für die Nutzung desselben Verkehrsweg-Elementes unterschiedliche Entgelte vereinbar sind, z.B. in Abhängigkeit von qualitativen Kriterien bei der verkehrswegseitigen Leistungsbereitstellung. So könnte beispielsweise ein geringeres Entgelt vereinbart werden, wenn ein Verkehrsweg-Element nur mit einer vom Soll-Zustand abweichenden langsameren Geschwindigkeit befahrbar ist oder zu einem definierten Zeitpunkt die Nachfrage zur Belegung eines Verkehrsweg-Elements nur sehr schwach ist. Ein wichtiger Aspekt der Erfindung besteht auch darin, dass konkurrierende Anfragen verschiedener Fahrzeuge anhand eines monetären Transaktionskriteriums entschieden werden können. So könnte beispielsweise in einem benutzungsregulierten Straßensystem die Benutzung einer beschleunigten Fahrspur, die frei von Schwerlastverkehren und langsamen Verkehrsteilnehmern ist, höher bepreist sein als die Benutzung einer langsameren Fahrspur. Konkurrierende Nutzungsanfragen verschiedener Fahrzeuge für dasselbe Verkehrsweg-Element kann durch Abschluss einer Transaktionsvereinbarung zwischen zwei oder mehreren als Entitäten repräsentierten Fahrzeugen über deren zeitliche Nutzungs-Reihenfolge geregelt werden.

Eine Ausführungsvariante der Erfindung sieht dabei vor, dass das Distributed Ledger-System als eine Blockchain ausgeführt ist.

Die Erfindung sieht ferner vor, dass das Verfahren mindestens eine Transaktions-Vereinbarung eines ersten Fahrzeugs mit einem zweiten Fahrzeug über den Tausch oder die Freigabe eines vom ersten Fahrzeug während eines festgelegten Zeitraums belegten Verkehrsweg-Elements umfasst. Dies bedeutet also, dass Fahrzeuge, sobald sie eine Belegung eines Verkehrsweg-Elements mittels des erfindungsgemäßen Verfahrens durchgeführt haben, als jeweils im selben Distributed Ledger-System repräsentierte Entitäten Transaktions-Vereinbarungen untereinander, d.h. mit jeweils anderen im Distributed Ledger-System als Entitäten repräsentierten Fahrzeugen, abschließen. Auf diese Weise ist basierend auf dem erfindungsgemäßen Disposititons- und Steuerungsverfahren auch ein nachgelagerter Tausch oder Handel von zur Nutzung freigegebenen Verkehrsweg-Elementen direkt zwischen den Fahrzeugen und ohne Zwischenschaltung eines Intermediärs möglich.

Es ist deshalb sehr sinnvoll, wenn die Transaktions-Vereinbarung eines ersten Fahrzeugs mit einem zweiten Fahrzeug über den Tausch oder die Freigabe eines vom ersten Fahrzeug während eines festgelegten Zeitraums belegten Verkehrsweg-Elements ein weiteres Transaktionskriterium beinhaltet, welches ein für den Tausch oder die Freigabe des Verkehrsweg-Elements durch das zweite Fahrzeug zu entrichtendes Entgelt bezeichnet.

Die vorliegende Erfindung wird nachfolgend anhand eines Ausführungsbeispiels näher erläutert.

Die Verkehrsweg-Elemente eines Schienen-Verkehrswegs (d.h. die für die Fahrbewegungen der Fahrzeuge notwendigen Infrastruktur-Elemente wie z.B. Gleise, Weichen und Signale) sowie deren aktueller Zustand sind in einer Blockchain repräsentiert. Hinsichtlich des Zustands wird in erster Linie erfasst, ob das Verkehrsweg-Element durch eine Transaktions-Vereinbarung für einen bestimmte Zeitspanne in der Gegenwart oder Zukunft durch ein anderes Fahrzeug belegt ist. Störungszustände können mittels einer zeitlich unbefristeten Belegung durch eine eigenständige Entität im erfindungsgemäßen Verfahren verfügbar gemacht werden. Dabei enthält die Blockchain nicht nur die aktuellen Ist-Zustände, sondern auch die aus früheren Transaktionen resultierenden Belegungs-Zustände der Vergangenheit, sowie Transaktionen mit Wirkungen für zukünftige Belegungs-Zustände.

Die Schienenfahrzeuge sind in der Blockchain durch ein Schlüsselpaar, welches einen privaten und einen öffentlichen Schlüssel umfasst, repräsentiert. Transaktionsanforderungen der Schienenfahrzeuge werden mit diesen Schlüsseln signiert.

Der private Schlüssel ermöglicht die eindeutige Zuordnung jeder Transaktionsanforderung zu einem Schienenfahrzeug.

Zur Reduzierung des Rechenaufwandes beim Betrieb des erfindungsgemäßen Verfahrens ist der Zugang zur Blockchain gemäß der an sich bekannten "proof of authority"-Methode beschränkt.

Für die Reservierung einer für eine Zugfahrt notwendigen Trasse, welche die Belegung mindestens eines Verkehrsweg-Elements umfasst, sendet das Schienenfahrzeug eine mehrere Transaktionsparameter (wie z.B. den Abfahrtsort, den frühestmöglichen Abfahrts-Zeitpunkt, den Zielort und den spätestmöglichen Ankunfts-Zeitpunkt) umfassende Transaktions-Anfrage an ein -Distributed Ledger-System, welches die gespeicherten Transaktionen nach möglichen Bewegungsrouten durchsucht und alle möglichen Varianten an das Schienenfahrzeug zurück übermittelt. Die an das Schienenfahrzeug zurück übermittelten Transaktionsparameter können den Preis der Benutzung der verschiedenen Verkehrsweg-Elemente als ein zusätzliches Transaktionskriterium beinhalten.

Mittels eines im Steuerrechner des Schienenfahrzeuges implementierten Algorithmus wird eine Auswahl aus der Mehrzahl von Routenalternativen getroffen und die Fahrbewegung gestartet. Das erfindungsgemäße Verfahren kann aber selbstverständlich auch eine zusätzliche manuelle Bestätigung durch menschliches Bedienpersonal als eine Voraussetzung für den Start der Fahrzeugbewegung vorsehen. Während die Konfliktfreiheit der Belegung der Verkehrsweg-Elemente durch die Widerspruchsfreiheit der Transaktions-Vereinbarungen im Distributed Ledger-System gewährleistet ist, kann eine zusätzliche Sicherung jeder über die Verkehrsweg-Elemente des Schienenverkehrsweges erfolgenden Fahrbewegung (z.B. gegen zu dicht auffahrende oder kreuzende Zugfahrten) mittels der herkömmlichen Sicherungssysteme des Schienenverkehrswegs (z.B. ortsfeste Signale) erfolgen.

## Patentansprüche

1. Verfahren zur Disposition oder Steuerung der Bewegungen einer Mehrzahl von Fahrzeugen über ein Netzwerk von Verkehrswegen, dessen Knoten und Kanten durch Verkehrsweg-Elemente gebildet sind,
wobei jedes Fahrzeug als eine in einem Distributed Ledger-System repräsentierte Entität Transaktions-Vereinbarungen mit den ebenfalls als Entitäten in diesem Distributed Ledger-System repräsentierten Verkehrsweg-Elementen abschließt, wobei jede Transaktions-Vereinbarung eines Fahrzeugs mit einem Verkehrsweg-Element mindestens eine Zeitangabe umfasst, die den Zeitraum der Belegung des Verkehrsweg-Elementes durch das Fahrzeug festlegt, und wobei die Verkehrsweg-Elemente einer für eine Fahrt des Fahrzeugs notwendigen Trasse zugehören.

2. Verfahren zur Disposition oder Steuerung der Bewegungen einer Mehrzahl von Fahrzeugen über ein Netzwerk von Verkehrswegen nach Patentanspruch 1, wobei jede Transaktions-Vereinbarung eines Fahrzeugs mit einem Verkehrsweg-Element ein weiteres Transaktionskriterium umfasst, das ein für die Belegung des Verkehrsweg-Elementes durch das Fahrzeug zu entrichtendes Entgelt bezeichnet.

3. Verfahren zur Disposition oder Steuerung der Bewegungen einer Mehrzahl von Fahrzeugen über ein Netzwerk von Verkehrswegen nach Patentanspruch 1 oder 2, wobei das Distributed Ledger-System als eine Blockchain ausgeführt ist.

4. Verfahren zur Disposition oder Steuerung der Bewegungen einer Mehrzahl von Fahrzeugen über ein Netzwerk von Verkehrswegen nach einem der Patentansprüche 1 bis 3, wobei das Verfahren mindestens eine Transaktions-Vereinbarung eines ersten Fahrzeugs mit einem zweiten Fahrzeug über den Tausch oder die Freigabe eines vom ersten Fahrzeug während eines festgelegten Zeitraums belegten Verkehrsweg-Elements umfasst.

5. Verfahren zur Disposition oder Steuerung der Bewegungen einer Mehrzahl von Fahrzeugen über ein Netzwerk von Verkehrswegen nach Patentansprüche 4, wobei die Transaktions-Vereinbarung eines ersten Fahrzeugs mit einem zweiten Fahrzeug über den Tausch oder die Freigabe eines vom ersten Fahrzeug während eines festgelegten Zeitraums belegten Verkehrsweg-Elements ein weiteres Transaktionskriterium beinhaltet, welches ein für den Tausch oder die Freigabe des Verkehrsweg-Elements durch das zweite Fahrzeug zu entrichtendes Entgelt bezeichnet.

## Claims

1. Method for planning or controlling the movements of a plurality of vehicles over a network of routes, the nodes and edges of which are formed by route elements,
wherein each vehicle as an entity represented in a distributed ledger system enters into transaction agreements with the route elements, likewise represented as entities in this distributed ledger system, wherein each transaction agreement of a vehicle with a route element comprises at least one time specification, which defines the period of time for which the route element is occupied by the vehicle, and wherein the route elements belong to a path necessary for a journey by the vehicle.

2. Method for planning or controlling the movements of a plurality of vehicles over a network of routes according to claim 1, wherein
each transaction agreement of a vehicle with a route element comprises a further transaction criterion, which refers to a fee to be paid for occupancy of the route element by the vehicle.

3. Method for planning or controlling the movements of a plurality of vehicles over a network of routes according to claim 1 or 2, wherein
the distributed ledger system is designed as a blockchain.

4. Method for planning or controlling the movements of a plurality of vehicles over a network of routes according to any of claims 1 to 3, wherein
the method comprises at least one transaction agreement of a first vehicle with a second vehicle on the exchange or release of a route element occupied by the first vehicle for a specified period of time.

5. Method for planning or controlling the movements of a plurality of vehicles over a network of routes according to claim 4, wherein
the transaction agreement of a first vehicle with a second vehicle on the exchange or release of a route element occupied by a first vehicle for a specified period of time includes a further transaction criterion, which refers to a fee to be paid for the exchange or release of the route element by the second vehicle.

## Revendications

1. Procédé de disposition ou de commande des déplacements d'une pluralité de véhicules par le biais d'un réseau de voies de circulation, dont les noeuds et arêtes sont formés par des éléments de voie de circulation,
dans lequel chaque véhicule conclut comme une entité représentée dans un système de registre distribué des accords de transaction avec les éléments de voie de circulation représentés aussi comme entités dans ce système de registre distribué, dans lequel chaque accord de transaction d'un véhicule comporte avec un élément de voie de circulation au moins une indication de temps qui détermine la période d'occupation de l'élément de voie de circulation par le véhicule, et dans lequel les éléments de voie de circulation appartiennent à un parcours nécessaire à un déplacement du véhicule.

2. Procédé de disposition ou de commande des déplacements d'une pluralité de véhicules par le biais d'un réseau de voies de circulation selon la revendication 1, dans lequel
chaque accord de transaction d'un véhicule comporte avec un élément de voie de circulation un autre critère de transaction qui désigne une rémunération à payer pour l'occupation de l'élément de voie de circulation par le véhicule.

3. Procédé de disposition ou de commande des déplacements d'une pluralité de véhicules par le biais d'un réseau de voies de circulation selon la revendication 1 ou 2, dans lequel
le système de registre distribué est réalisé comme une chaîne de blocs.

4. Procédé de disposition ou de commande des déplacements d'une pluralité de véhicules par le biais d'un réseau de voies de circulation selon l'une quelconque des revendications 1 à 3, dans lequel
le procédé comporte au moins un accord de transaction d'un premier véhicule avec un second véhicule par le biais de l'échange ou la libération d'un élément de voie de circulation occupé par le premier véhicule pendant une période fixée.

5. Procédé de disposition ou de commande des déplacements d'une pluralité de véhicules par le biais d'un réseau de voies de circulation selon la revendication 4, dans lequel
l'accord de transaction d'un premier véhicule avec un second véhicule contient, par le biais de l'échange ou la libération d'un élément de voie de circulation occupé par le premier véhicule pendant une période fixée, un autre critère de transaction qui désigne une rémunération à payer pour l'échange ou la libération de l'élément de voie de circulation par le second véhicule.
